# EUROPEAN PATENT SPECIFICATION

(11) **EP 1 643 850 B1**
(45) Date of publication and mention of the grant of the patent: **24.03.2010**
(21) Application number: 04748715.2
(22) Date of filing: 08.07.2004
(51) Int. Cl.: A23J 3/08, A23J 3/10, A23J 3/22, A23J 3/26, A23L 1/0532, A23L 1/0524, A23L 1/054, A23G 1/00, A23G 3/00, A23C 19/09, A23L 2/66

(54) **FIBRE-COMPRISING FOOD PRODUCT, METHOD FOR PREPARING A FOOD PRODUCT OF THIS TYPE, AND USE THEREOF**
BALLASTSTOFFE ENTHALTENDES LEBENSMITTEL, VERFAHREN ZUR HERSTELLUNG UND VERWENDUNG
PRODUIT ALIMENTAIRE CONTENANT DES FIBRES, PROCEDE DE PREPARATION D'UN PRODUIT ALIMENTAIRE DE CE TYPE ET SON UTILISATION

(30) Priority: 11.07.2003 NL 1023906
(43) Date of publication of application: 12.04.2006
(73) Proprietor: NUG NAHRUNGS-UND GENUSSMITTEL VERTRIEBSGESELLSCHAFT MBH, 71334 Waiblingen (DE)
(72) Inventor: PENDERS, Johannes, Antonius, NL-5324 AV Ammerzoden (NL); VAN SEPTER-BEKHUIS, Anna, Maria, NL-3902 JE Veenendaal (NL)
(74) Representative: van Westenbrugge, Andries
(86) International application number: PCT/NL2004/000489
(87) International publication number: WO 2005/004623

(56) References cited:
- WO-A-01/64044
- WO-A-02/056705
- DE-B- 2 342 347
- NL-C- 1 008 364
- US-A- 3 093 483
- US-A- 3 627 536
- US-A- 4 559 233
- US-A- 5 368 871
- US-A- 5 932 271

## Description

The invention relates to a fibre-comprising food product.

A product of this type is described in the PCT application PCT/NL02/00594 in the name of the Applicant, which was not published before the filing date of the present application.

The said application describes a method for preparing a protein-containing, fibre-comprising product, in which:
1. a protein material, a hydrocolloid that precipitates with metal cations and water are added to one another;
2. the composition from step 1 is made into a homogenous mixture;
3. the mixture from 2 is mixed with a solution of a metal cation with a valency of at least 2 in order to form a fibre-comprising product;
4. the fibre-comprising product is isolated,
which method is **characterized in that** the protein material comprises a milk protein material and the mixture of protein material, hydrocolloid that precipitates with metal cations and water is formed in the presence of a quantity of a phosphate material. With regard to the phosphate material, the abovementioned International Application states that this may also be another material which is able to complex the calcium ions that are present in the milk protein material, such as EDTA. Other materials can also be used, and since this is the foodstuffs sector, it will also be possible to use a material such as sodium citrate. Therefore, wherever the present application refers to phosphate material as the material that can be used to bind/complex calcium ions, it should be understood that it is also possible for other materials to be used for the same purpose, such as EDTA, sodium citrate and the like.

US 3,093,483 describes a process for preparing a food product having a fibrous texture which comprises forming a sol of a polymeric carbohydrate gel precursor capable of producing a continuous thermostable gel, forming said gel into oriented, gelled fibers, said gelation being caused by the use of an alkaline earth metal ion. Example IV of this US patent describes the preparation of high protein fibres by extruding an aqueous colloidal solutions containing sodium alginate and casein through a spinneret into a coagulating vat containing calcium acetate and acetic acid.

US 3,627,536 describes a method of preparing proteinaceous fibers comprising the steps of:
1. admixing a proteinaceous aqueous suspension with a water soluble alginate salt;
2. adding coagulating agent gradually to the admixture which is being stirred whereby soft fibers are formed;
3. adding an acidic coagulation-accelerating agent with continued stirring whereby the fibers are hardened;
4. boiling the mixture of said fibres, coagulating agent and coagulation-accelerating agent to coagulate the heat coagulatable protein content of the fibers; and
5. washing said fibers with water.

Depending on the material that complexes calcium ions which is used, it may be necessary to adapt the pH of the homogenous mixture prior to mixing with the solution of metal cations with a valency of at least 2. To form the fibres, the pH of the said mixture has to be set in the range from 4-7. To obtain a product with meat-like properties, the pH will expediently be set in the range from 5.0-7.0.
To obtain a product with fish-like properties, it is preferable to maintain a range from 4.5-6.0.

It is an object of the present application to provide a wider range of applications for the abovementioned fibre-containing food product which is described in PCT/NL02/00594, and to this end the present application relates to a food product which comprises fibres that are composed of milk protein material, a hydrocolloid that is made water-insoluble by metal cations, material that has complexed calcium ions and optionally moisture, as well as additional edible material that differs from the composition of the fibres and is in contact with at least some of the fibres, the fibres optionally comprising food-grade materials selected from colour, odour and flavourings. The color, odour and flavourings to be used may be introduced into the homogenous mixture from which the hydrocolloid/milk protein fibres are formed by precipitation. The colour, odour and flavourings may also be introduced by impregnation of the fibres which have already been formed.

It has been found that the fibrous product described in the abovementioned PCT application which was not published before the filing date of the present application can provide a wide range of possible uses in sectors such as sweets and candy, liquid breakfast products and solid breakfast products, although the range of applications is not limited to these specific applications.

The following text serves to provide a more detailed description of the fibrous product that forms the basis of the food products obtained in accordance with the present application.

The material present in the fibrous material that has complexed calcium ions, such as a calcium phosphate complex, is associated with the nature of the protein material used. Milk protein or materials derived therefrom contain free calcium ions which occur naturally or are added during processing and which may enable the hydrocolloid that precipitates with metal cations and is present in the mixture to precipitate prematurely, which has a highly disruptive effect on the remainder of the method for forming fibres and can lead to a serious lack of uniformity in the end product, if indeed a usable end product is obtained at all.

In the above-described method according to application PCT/02/00594, which was not published before the priority date of the present application, the presence of a suitable quantity of phosphate material or other material that complexes calcium ions causes the free Ca²⁺ ion content to be complexed, so that there is no premature precipitation of the hydrocolloid used. A homogenous mixture can then be obtained without problems.

It should be noted that wherever the above text states that the food product according to the invention comprises a material that has complexed calcium ions, such as a phosphate material, this is to be understood as meaning that this material may be present in larger or smaller quantities depending on the method steps employed and the thoroughness of, for example, washing treatments. The phosphate, edetate or the like which has bonded calcium ions may be retained by the fibres; however, thorough washing can also remove a large part if not all of the material. Complexing material which has not bonded any calcium ions may also be present, but the majority of this material will have been removed by washing.

Phosphate or other suitable material as described, in addition to the action of complexing free calcium ions, also has a protein-digesting action. The protein-digesting action manifests itself, inter alia, in an improved uptake of water and has a positive influence on the mouthfeel.

It is expedient first of all to make up a mixture of protein material and water and for the phosphate material or other material to be added to this mixture. Then, the hydrocolloid that precipitates with metal cations with a valency of at least 2 is added, and the mixture is stirred to produce a homogenous mixture. In addition to stirring, it is also possible to use other forms of distribution, such as homogenization, milling, dispersion and the like.

The method may be used, inter alia, with a number of milk protein materials that are isolated during cheese making, and in this context mention should be made of cheese curd, cheese and cheese products; it is also possible to process materials such as milk powder, sodium caseinate, calcium caseinate (or in more general terms alkali metal, alkaline-earth metal and ammonium caseinate), whey protein, crosslinked casein and the like.

Obviously, it is also possible to use mixtures of two or more protein materials to prepare a meat substitute product.

In a method which is aimed at the processing of materials such as cheese curd and cheese, to prepare a milk protein fibre the starting material is if desired converted into a finely divided form (for example cheese can be grated) and is mixed with water and phosphate material or other suitable material in a quantity which is sufficient to complex the free calcium ions that are present, after which a hydrocolloid that precipitates with metal cations is added. This is followed by vigorous mixing to obtain a homogenous mixture.

The phosphate or other suitable material enables a homogenous mixture, such as an emulsion, to be formed at elevated temperature from protein material, such as milk protein material, a hydrocolloid that precipitates with metal cations and water.

The hydrocolloid that precipitates with metal cations, this hydrocolloid being a polysaccharide, may be selected from pectin with a low methoxyl group content, Gellan gum and alginate; of these, sodium alginate is preferred. Numerous alginates are commercially available; in the context of the invention, use is made, for example, of Ca-reactive alginates, such as of the type obtained from "Brown algae".

If a solution of a metal cation with a valency of at least 2 is added to the homogenous mixture, in which there are substantially no longer any free calcium ions, and which contains complexes of milk protein material and a hydrocolloid of the above type that precipitates with metal cations, a fibrous product will be formed in a controlled way, and this product, after optional washing and removal of excess moisture, has a meat-like structure.

In connection with what has been described above, reference is also made to US-A 4,559,233.

The abovementioned patent describes the formation of a protein product starting from whey protein.

Whey protein/xanthan gum complexes are formed and are precipitated iso-electrically.

This publication does not describe the use of hydrocolloid that precipitates with metal cations, the complexing of free calcium ions that are present with a phosphate material and the precipitation step using a solution of metal cations with a valency of at least 2.

In the present method, after the homogenous mixture has been formed, a solution of a metal cation with a valency of ≥ 2 is added in order to form milk protein/hydrocolloid fibres, such as milk protein/alginate fibres.

The metal cation solution generally contains soluble calcium or magnesium salts or mixtures thereof. Suitable calcium salts include calcium chloride, calcium acetate and calcium gluconate.

The quantity of metal cations to be used, for example in the form of calcium chloride, in the precipitation solution amounts to 0.01 to 15% by weight, expediently 0.5-8% by weight and advantageously 4-8% by weight.

If the material that complexes calcium ions which is to be used for milk protein material containing free calcium ions is a phosphate material, generally a phosphate material which is able to complex metal cations with a valency of at least 2, such as calcium and magnesium, this phosphate material is expediently selected from alkali metal and ammonium salts of phosphoric acid or polyphosphoric acid.

The phosphate material may, for example, be disodium hydrogen phosphate, trisodium phosphate or sodium hexametaphosphate.

The phosphate material may also be sodium polyphosphate (NaPO₃)ₙ, where n - 25.

The quantity of phosphate material to be used is at least sufficient to complex the free calcium ions that are present. In view of the protein-digesting action of phosphate as described above, in certain cases an excess of phosphate is desirable and will even in general be maintained.

The phosphate material is expediently added in a quantity of from 0.1 to 1.5% by weight, based on the total of all the constituents of the homogenous mixture.

The salts, phosphates, other materials that complex calcium ions and the like to be used will in all cases be of a type and purity which are permitted for use in foodstuffs.

With regard to the phosphate material which is used to complex the free calcium ions, it should also be noted that this is a readily available material which offers advantages in terms of its price. However, other complexing materials are not ruled out; for example, if desired a known complexing agent, such as EDTA of food grade, can also be used to the same effect. Other similar agents can also be used with success.

The hydrocolloid that is sensitive to metal cations may be selected from the group given above; however, it is expedient for the hydrocolloid to be sodium alginate.

Examples of suitable alginates include, for example, DMB sodium alginate (Manugel) from Kelco and the product FD125 from Danisco Cultor. Other alginates that precipitate with metal cations can also be used.

When forming the milk protein fibre product as described, the pH of the homogenous mixture of protein, hydrocolloid that precipitates with metal cations and water is advantageously set to a value in the range from 4 to 7.

The precise pH within that range will be selected according to the type of structure which it is desired to prepare from the milk protein fibre material.

For example, to prepare a first type of structure starting from a milk protein material, the pH will be set to between 5.0 and 7.0.

In the context of the present invention, a first type of structure is to be understood as meaning a structure which resembles the structure of beef, pork or chicken. This structure has relatively long fibres.

If a second type of structure is desired, which is closer to fish, starting from milk protein material the pH is set to between 4.5 and 6.0. This structure has relatively short fibres as a characteristic property.

The specific details of the first or second type of structure can be set by varying the quantity of hydrocolloid, such as sodium alginate, used, and the type of alginate, as well as the quantity of calcium chloride.

In general, it is also possible to add finishing materials; these materials are preferably added to the homogenous mixture of protein, hydrocolloid that precipitates with metal cations and water which is formed at elevated temperature. The finishing material may be selected from a flavouring, a colorant, vegetable or animal fat, vegetable or animal proteins, vegetable and/or fruit pieces and/or mixtures of two or more materials of this type. Obviously, it is also possible to add finishing materials and to mix them in after the fibrous product has been formed by precipitation.

In a number of specific embodiments which proceed from various starting materials, the method as described takes the following form.

Firstly, to form a fibrous product starting from cheese curd:
- identical quantities by weight of cheese curd and water are mixed at approximately 50°C (total weight 2A) in the presence of 0.8-1.2% by weight, based on 2A, of sodium polyphosphate,
- 2.5-3.5% by weight, based on 2A, of sodium alginate are added with stirring, as well as water at approximately 50°C in a quantity by weight A,
- the homogenous mixture formed is mixed with stirring with a 3-5% strength by weight CaCl₂ solution in a quantity by weight A to form a fibrous product,
- ○ after which the fibrous product formed is isolated and finished.

In another embodiment, to form a fibrous product starting from cheese:
- identical quantities by weight of grated cheese and water are mixed at approximately 50°C (total weight 2B) in the presence of 0.8-1.2% by weight, based on 2B, of sodium polyphosphate,
- 2.5-3.5% by weight, based on 2B, of sodium alginate are added with stirring, as well as water at approximately 50°C in a quantity by weight B,
- the homogenous mixture formed is mixed with stirring with a 3-5% strength by weight CaCl₂ solution in a quantity by weight B to form a fibrous product,
- after which the fibrous product formed is isolated and finished.

In yet another embodiment, a fibrous product is formed starting from sodium caseinate **characterized in that**
- a 10-15% strength by weight solution of sodium caseinate in water is made up (total weight C) in the presence of 0.2-0.4% by weight of sodium polyphosphate, based on C,
- butter is added in a quantity of 15-20% by weight, based on C,
- 3-5% by weight, based on C, of sodium alginate is added with stirring, as well as water at approximately 50°C in a quantity by weight of 80-95% by weight, based on C,
- the homogenous mixture formed is mixed with stirring with 3-5% strength by weight calcium chloride solution in a quantity of 80-95% by weight, based on C, to form a fibrous product, and
- the fibrous product formed is isolated and finished.

In yet another embodiment, the method according to the invention is **characterized in that**, to form a fibrous product starting from whey protein:
- a 15-20% strength by weight solution of whey protein in water (total weight D) in the presence of 0.2-0.4% by weight of sodium polyphosphate, based on D, is made up
- butter is added in a quantity of 12-18% by weight, based on D,
- 3-7% by weight of sodium alginate is added, based on D, with stirring, as well as water at approximately 50°C in a quantity of 80-85% by weight, based on D, and
- the homogenous mixture formed is mixed with stirring with 3-5% strength by weight calcium chloride solution in a quantity of 80-85% by weight, based on D, to form a fibrous product,
- the fibrous product formed is isolated and finished.

Starting from skimmed milk powder, according to the invention, to form a fibrous product
- a 25-35% strength by weight solution is made of skimmed milk powder in water (total weight E) in the presence of 0.5-1.0% by weight, based on E, of sodium polyphosphate,
- butter is added in a quantity of 11-15% by weight, based on E,
- 4-6% by weight, based on E, of sodium alginate is added with stirring, as well as water at approximately 50°C in a quantity of 65-75% by weight, based on E,
- the homogenous mixture formed is mixed with stirring with a 3-5% strength by weight CaCl₂ solution in a quantity by weight of 65-75% by weight, based on E, to form a fibrous product,
- after which the fibrous product formed is isolated and finished.

In the specific embodiments given above, the percentages and quantities by weight are given as accurate figures; however, it should be understood that deviations from these accurate values are permitted and that the values are intended to provide an indication of the order of magnitude by weight in which the materials are present with respect to one another.

As has been discussed above, when carrying out the method to convert milk protein material into a fibrous milk protein product without the presence of phosphate material, the homogenous mixture to be formed will not form or will only form with difficulty, on account of the fact that the calcium ions that are naturally present or are added during the processing lead to premature precipitation of the hydrocolloid or polysaccharide used, which results in a product which is not as cohesive and is more difficult to cut.

Surprisingly, it has now been found that the present method can with certain milk protein materials also be carried out without the presence of phosphate material yet a homogenous mixture can be formed without problems and a good fibrous product is obtained.

In one particular embodiment, therefore, in the method described above the protein material comprises a milk protein material selected from milk powder, whey protein and caseinate (in particular food-grade alkali metal or ammonium caseinate), and the method is carried out in the absence of a phosphate material.

Specifically, it has been found that the abovementioned materials either contain little calcium per se (such as alkali metal or ammonium caseinate, in particular sodium caseinate, and whey protein) or contain relatively few free calcium ions (such as milk powder), and that in such cases good results are obtained even if the phosphate material is omitted. One possible explanation for this is that materials of this type have undergone a treatment process in which the calcium which was present is substantially removed (alkali metal or ammonium caseinate and whey protein) and/or the calcium has been bonded in some way (milk powder).

Therefore, the abovementioned PCT/NL02/00594, which was not published before the filing date of the present application, also relates to a method for preparing a meat substitute product which comprises protein, in which:
1) a protein material, a hydrocolloid that precipitates with metal cations and water are added to one another,
2) the composition from step 1) is made into a homogenous mixture,
3) the mixture from 2) is mixed with a solution of a metal cation with a valency of at least 2, to form a fibrous product,
4) the fibrous product is isolated,
   **characterized in that**
5) the protein material comprises a milk protein material selected from milk powder, whey protein and caseinate.
The latter protein material, caseinate, is expediently alkali metal or ammonium caseinate of food grade.

The abovementioned list of milk protein materials, within the range of these materials, forms a selection which successfully produces a suitably usable product without phosphate. In these cases, the abovementioned digestive action of the phosphate is absent; nevertheless, the product obtained is readily suitable for consumption purposes.

The following text gives a number of examples of methods used to form fibres.

### Fibre-forming Example I: Cheese curd as starting material

A mixture of 600 grams of curd (Maasdam curd (45+% fat in the dry matter), calcium content: 533 mg/100 g, moisture content 63.4%) and 600 ml of water at a temperature of 55°C and 12 grams of sodium polyphosphate (NaPO₃)ₙ, where n∼25, is prepared. The mixture is transferred into a high-speed mixer. With continuous mixing, 40 grams of sodium alginate (Kelco, Manugel DMB) and 600 ml of water are added. The mixture prepared is sprayed, while stirring continues, with 600 ml of a 4% strength by weight calcium chloride (CaCl₂) solution. The ratio between cheese curd weight and the total weight of water is in this case 1 to approximately 3. During stirring, a fibre is formed and this fibre is taken out of the remaining liquid.

### Fibre-forming Example II: Cheese as starting material

A quantity of 600 grams (50+% fat in dry matter) of cheese of the Maasdam type which has been ripened for 5 weeks calcium content: 786 mg/100 grams, moisture content 39.5%) in grated form is mixed with 12 grams of sodium polyphosphate and 600 ml of water at approximately 55°C. 40 grams of sodium alginate (Kelco DMB) and 600 ml of water at 55°C are added to this more or less homogenous mass in a high-speed mixer with continuous mixing. The thick mass formed is gradually mixed with 600 ml of a 4% strength by weight calcium chloride solution until fibre formation was complete. The fibres formed are removed and washed in ample water to remove the excess calcium chloride.

### Fibre-forming Example III: Sodium caseinate as starting material

The starting point was 85 grams of sodium caseinate (DMV International, sodium caseinate) with a calcium content of 76 mg/100 grams, a protein content of 90% and a moisture content of 5%. The sodium caseinate was dissolved in 600 ml of water at 45°C. 2 grams of sodium polyphosphate were then added, followed by 110 grams of butter. After mixing to form a homogenous mixture, 30 grams of sodium alginate and 600 ml of hot water were added with vigorous stirring. The mixture obtained was treated with 600 ml of a 4% strength by weight calcium chloride solution until a long, strong fibre is obtained. The fibres are washed to remove the excess calcium chloride.

### Fibre-forming Example IV: Whey protein concentrate as starting material

125 grams of whey protein concentrate (Arla, Lacprodan 80, calcium content: 374 mg/100 grams, moisture content 5.5%) with a protein content of 82% are dissolved in 600 grams of water at 45°C and mixed with 2 grams of sodium polyphosphate and 110 grams of butter. After pressing/mixing, 40 grams of sodium alginate and 600 ml of water at 45°C are added to the mixture with intensive stirring. The mixture obtained is treated with 600 ml of a 4% strength by weight calcium chloride solution, and the fibres obtained are washed.

In a separate test, the abovementioned whey protein concentrate, after dissolution in water, was subjected to a denaturation treatment by being heated for 10 minutes at 95°C. This was followed by cooling to 45°C, and the test was continued as described above. The result of the test was comparable to the result of the original test described above; it was in this way possible to limit the protein losses via the washing water.

### Fibre-forming Example V: Milk powder as starting material

The milk protein used is skimmed milk powder (calcium content: 1160 mg/100 grams, moisture content: 4%, protein content: 30%). A quantity of 250 grams was dissolved in 600 ml of water, to which 4 grams of sodium polyphosphate and 110 grams of butter were added. Then, 40 grams of sodium alginate and 600 ml of water were added to this composition. After the emulsion obtained was treated with 600 ml of a 4% calcium chloride solution, a white fibre of pleasing appearance is obtained, and this fibre is washed.

In the fibre-forming examples given above, use is made of dry sodium alginate which is added to the emulsion of milk protein material, phosphate material, water and any other material.

It has been found that it may be advantageous to use the sodium alginate in dissolved form.

The following examples may serve as an illustration.
A. Use of dry alginate.
   1200 g of water were added to 600 grams of Gouda cheese, together with 18 grams of sodium polyphosphate. At a temperature of 70°C, a cheese emulsion is obtained and is set to a pH of 7 using 10% strength NaOH solution.
   50 g of sodium alginate (Kelco Manugel DMB) are added with intensive mixing, resulting in a viscous homogenous mixture (mayonnaise-like in character).
B. Use of dissolved alginate.
   400 g of water and 18 g of sodium polyphosphate were added to 800 grams of cheese, with heating to 70°C. The emulsion obtained is brought to a pH of 7 using NaOH solution. Separately, 35 grams of sodium alginate are dissolved in 1000 g of water. The cheese emulsion and the sodium alginate solution are mixed to form a homogenous mixture.
   Processing of the homogenous mixtures obtained under A) and B) to form fibres using 600 ml of 8% strength by weight calcium chloride solution in water reveals that the end quality, in terms of fibre strength, is identical. Therefore, when Examples A and B are compared, it has proven possible to save on sodium alginate. Method A) or B) can be used as desired when preparing fibres for use in the present invention.

All the methods mentioned above, which are described in PCT/NL02/00594, can be used to prepare milk protein fibres which can be incorporated into a food product according to the present invention and/or can be used in the method according to the invention to prepare a food product of this type. The description of PCT/NL02/00594 is hereby incorporated by reference in the present application.

The food product described above in accordance with the present invention which comprises fibres may take numerous different forms.

In a first embodiment, the food product takes the form of a candy and is coated with chocolate. The fibre-comprising food product can for this purpose be brought into a suitable form by pressing or compacting in other ways, and this form is then immersed in a bath of coating chocolate, as is known from the prior art. The chocolate bath is at an elevated temperature, so that it has a liquid consistency; immersing the fibre-containing food product in a bath of this type produces a uniform chocolate coating which solidifies when the food product that has been immersed in this way is cooled in air.

In a second embodiment, the food product is in the form of a candy and is coated with a mixture of nuts or pieces of nuts. The (pieces of) nuts and fibres are placed in layer form in a press mould, in such a manner that the (pieces of) nuts are situated on the outside of the product. The product is pressed for a certain time (5-50 min) at a pressure of 0.8 kg/cm². After pressing, the product is vacuum-packed and pasteurized, thereby preserving the shelf life of the candy.

In a third embodiment, flavours, such as cherry, orange, lemon, etc. suitable for the covering means used, such as (pieces of) nuts, dried fruit pieces, etc. are added to the homogenous mixture from which the fibre is formed.

In a fourth embodiment, a multilayer, savoury form is prepared in a press mould. Fibre, ham, fibre, ham and fibre are introduced in layers into a press mould, after which the layer assembly formed in this way is pressed (0.8 kg/cm²) for a certain time (5-50 min) to form a compact, cohesive bar. A product with a long shelf life which can be stored without cooling is obtained by vacuum-packing and pasteurization.

The products obtained in all the embodiments described above can, after removal of any packaging, be consumed directly without the need for any further treatment. Obviously, it is possible for the products if desired to be heated, with or without packaging, in order to bring them to a pleasant use temperature. Heating may be effected, for example, in a microwave oven, au bain marie or the like.

Heating is not required for the quality of the product or its consumability.

The composition, basic flavour and external form of the product can be subject to countless variations without departing from the scope of the invention as represented in the appended claims.

If appropriate, the nuts or pieces of nuts or other flavour- or bite-imparting materials that are present on the outer side of a product formed can be covered with a glaze. The covering with a glaze is carried out in a customary way. Glaze compositions which are suitable for this purpose are known to the person skilled in the art; a suitable composition is, for example, a simple sugar solution, as is supplied as standard with "do-it-yourself" packets for preparing millefeuilles.

The abovementioned candy form may take numerous forms but is in many cases a slab, bar or disc.

In a fifth attractive embodiment, the food product is a liquid breakfast product in which the fibres represent a subordinate part of the product in order to provide it with bite while it is being consumed.

Liquid breakfast products of this type are commercially available - consider for example the product Hero Fruitontbijt® and Hero Multifruit®; various dairy-based liquid breakfast materials are also known. One example of a dairy-based liquid breakfast material is Goedenmorgen® produced by the Applicant.

In the case of Hero Fruitontbijt®, one tablespoon of milled milk protein fibres as described above was added to 150 ml of liquid breakfast. The size of the milled fibre was from 0.1 to 2 mm; the pieces of fibre floated as a result of the high viscosity of the liquid.

In a sixth embodiment, the food product is in the form of a burger, while the milk protein fibres are mixed with particulate materials, such as nuts or pieces of nuts, small pieces of cheese, sugar material, chocolate or any other material in particle form which is used in sweet food products. The quantities of particulate materials are from 10 to 40% by weight, based on the total of the composition of milk protein fibres and particulate materials.

In a seventh embodiment, the food product takes the form of a burger, while the milk protein fibres are formed using liquid materials, such as fruit juices, sugar/vinegar mixtures, vinegar-based spread product, yoghurt and soft curd cheese or any other sour-tasting liquid material which can be used in the food industry. The burger formed in this way has a slightly sour taste and would be intended to compete with snacks, appetizers and the like. Materials which may be mentioned include 3% strength table vinegar with 1 to 6 g/l of sugar, in particular 4 to 5 g/l of sugar, as an example of a sugar-vinegar mixture. Another example of a liquid material used was fruit-flavour Yogo Yogo®.

Good results are also obtained with buttermilk and yoghurt.

In the seventh embodiment given above, the fibres are formed using various materials. As indicated above, these materials may be introduced into or used during the formation of a homogenous mixture from which the fibres are subsequently formed. The materials may also be used to impregnate fibres which have already been formed.

The invention also relates to a method for preparing a food product as described above which is **characterized in that** the milk protein fibres, after optional impregnation with food-grade materials, are mixed with an additional edible material, and the mixture obtained in this way is made into the desired form, selected from a candy form and a burger form, by pressing.

With regard to the candy form, it is possible to select from a slab, bar or disc or any other form which is customarily used in the candy industry. A burger form is a flat disc as is customary for hamburgers. The fibres may be natural, i.e. unmixed with any substance which imparts odour, colour or flavour, but may also if desired be impregnated with such substances imparting odour, colour or flavour. Of course, the impregnation materials to be used must be of food grade; the person skilled in the art will be able to select from among such materials. As has already been indicated above, any materials to be used selected from odour, colour and flavourings or other materials, may already have been added to the homogenous mixture from which the hydrocolloid/milk protein fibres are formed through precipitation with metal cations.

In a first embodiment, the milk protein fibre form obtained by pressing will be coated.

The coating may be effected, for example, by bringing the form obtained by pressing into contact with one or more coating compositions selected from a liquid chocolate composition, honey and pieces of nuts, glaze and pieces of nut, etc.

With regard to the mixed compositions, it should be noted that these may be complete, i.e. a combination of, for example, honey and pieces of nuts or glaze and pieces of nuts. It is also possible, within the scope of the method, for a coating composition of this type to be applied in two steps, i.e. for example for the honey or honey composition to be applied first, with the liquid honey (composition) then being covered with nuts or pieces of nuts.

It is also possible, in the case of glaze/nut compositions, for the nuts or pieces of nuts to be applied to the candy form first (if appropriate using a food-grade bonding agent), then for the nut composition layer to be covered with a glaze.

In general, after it has been formed and/or finished, the food product is subjected to a treatment with a germicidal action, such as pasteurization, sterilization, treatment with rays, such as γ-rays, and the like. It is expedient to carry out a pasteurization treatment prior to the finishing of a product with, for example, a coating. Pasteurization may be carried out at a temperature between 60 and 90°C and for a period of 5-45 min. In one typical case, pasteurization is carried out for 45 min at 90°C.

The product obtained with the aid of the method is generally packaged, if appropriate vacuum-packed.

Vacuum-packing in plastic film is known per se and, in particular in the present food products, creates attractive shelf life properties and handling properties. It should also be noted that the pasteurization is expediently carried out on the product in packaged form.

Finally, the invention relates to the use of a food product as described above and/or obtained with the aid of the method described as a base for a breakfast product to which the consumer can add food materials as desired, such as fruit, jam, cheese material, meat products and the like.

The food product which has been made into a suitable form as described above may also have a range of food materials or food material mixtures as mentioned above "applied" to it by the consumer immediately before it is consumed. The range of possible applications can vary very widely, and in all cases the result is a breakfast product which has an outstanding taste and nutritional value.

The above text has described a food product which is composed of fibres formed from milk protein material, a hydrocolloid made water-insoluble by metal cations, phosphate material and optionally moisture, which fibres are in contact with a different, additional edible material. The fibre product which forms part of the food product may be consumed as such without further treatment. After the fibres have been formed and the optional customary treatments, such as washing, removal of adhering water, optional impregnation with food-grade materials selected from substances that impart flavour, odour and colour, and drying, have been carried out, the additional edible material may be added by coating a form or mixing, after which consumption is possible without any treatment by the consumer, such as cooling, heating, baking, etc.

Obviously, the consumer is free to carry out any treatment of his choice; however, this is not required for the product to be consumed.

The invention will now be described on the basis of a number of examples.

### EXAMPLE 1

### Fibre product in slab form

The milk protein fibres, after they had been formed, were formed into a 5 to 10 mm thick fibre slab by pressing for 15 min at a pressure of 1 kg/cm². A piece in bar form measuring 80 × 25 × 5 mm was immersed in chocolate at a temperature of 50°C. After the chocolate had solidified, a chocolate-coated bar with a pleasant sweet taste was obtained.

The material in slab form can also be placed between the two halves of a Snicker/cruncher® cut in half and submerged in chocolate to obtain an extremely tasty candy product.

It is also possible for the milk protein fibres to be impregnated with fruit flavour, such as pineapple and cherry and to be coated with chocolate in bar or disc form.

### EXAMPLE 2

The bar of milk protein fibres described in Example 1 was submerged in honey and then covered with nuts on the outer side. An extremely tasty candy product was obtained with good handling properties without any stickiness.

### EXAMPLE 3

### Bar form with nuts and glaze

In this case, the fibres were produced by replacing some of the water with orange juice while they were being produced. The fibres with an orange taste, after a bar had been formed by pressing, were covered with, for example, small pieces of almond and finished with glaze as described above.

### EXAMPLE 4

### Scented chocolate food product

The slab described above was cut into pieces measuring 20 × 20 × 5 mm and, optionally provided with a biscuit, submerged in warm chocolate at approximately 50°C then cooled. After they have been formed, the fibres may also be mixed with small pieces of nut, such as walnut, almond or hazelnut, pressed to form a slab after which, optionally after having been divided up to form scented chocolates, they can be coated with chocolate in order to form a candy product which contains nuts and is coated with chocolate.

### EXAMPLE 5

### Burger mixed with additional materials

Roasted almonds (for example 20% by weight) or walnuts (30% by weight) were added (percentages are based on the total fibre + addition) to the milk protein fibre, after the fibre/nut mixture was pressed for 30 s at 6 bar to form round burgers.

In another embodiment, 20% by weight of grated mature cheese were added, followed by pressing for 30 s at 6 bar.

The burgers were pasteurized for 45 min at 90°C.

### EXAMPLE 6

### Sweet burger

In a first embodiment, the milk protein fibre was submerged in strawberry pulp for 2 hours (containing 19 g/l of carbohydrates). The fibre, which tasted of strawberries, was pink in colour, had good pressing properties (6 bar, 30 s) and a solid and dry structure. Pasteurization was carried out for 45 min at 90°C.

In another case, the fibre was mixed with castor sugar; the sweetened fibre had good pressing properties (6 bar, 30 s). A similar result was obtained by adding 10% by weight of sugar candy to the fibre. This burger was also pasteurized for 45 min at 90°C.

### EXAMPLE 7

### Sour burger

Milk protein fibre was submerged in pickled gherkin pulp (contains 4.5 g/l sugar in 3% strength table vinegar) for 2 h. The fibre, which tasted of pickled gherkins, had good pressing properties (6 bar, 30 s) and was pasteurized for 45 min at 90°C.

A comparable result was obtained by submerging the milk protein fibres for 2 h in 3% strength table vinegar or natural SANDWICH SPREAD®.

In another embodiment, natural fibre was submerged for 2 h in fruit-flavour Yogo Yogo® (pH = 4). After rinsing with water, the fibre material was pressed (6 bar, 30 s) and pasteurized (45 min, 90°C). Extremely tasty burgers were obtained.

## Claims

1. Food product which comprises fibres that are composed of milk protein material, a hydrocolloid that-is-made-water-insoluble by metal cations, material that has-complexed calcium ions and optionally moisture, as well as additional edible material that differs from the composition of the fibres and is in contact with at least some of the fibres, the fibres optionally comprising food-grade materials selected from colour, odour and flavourings.

2. Food product according to claim1, **characterized in that** the food product takes the form of a candy and is coated with chocolate, a mixture of honey and nuts or pieces of nuts.

3. Food product according to claim 1, **characterized in that** the food product takes the form of a candy, the fibres are impregnated with natural fruit flavour and the candy form is coated with nuts or pieces of nuts which are covered with a glaze.

4. Food product according to one or more of claims 1-3, **characterized in that** the candy form is selected from a slab, bar or disc shape.

5. Food product according to claim 1, **characterized in that** the food product is a liquid breakfast product, and the fibres represent a minor part of the product to give bite when it is being consumed.

6. Food product according to claim 1, **characterized in that** the food product is in burger-form and the fibres are mixed with particulate materials, such as nuts or pieces of nuts, small pieces of cheese, sugar material and chocolate.

7. Food product according to one or more of claims 1 and 6, **characterized in that** the food product is in burger-form and the fibres are formed using liquid materials, such as fruit juices, sugar/vinegar mixtures, vinegar, sour spread product, yoghurt, buttermilk and soft curd cheese.

8. Food product according to claim 1, **characterized in that** it takes the form of a burger and is composed of a savoury material and fibres and that it comprises a laminated structure of fibres and savoury materials in which the fibres form the outer side.

9. Method for preparing a food product according to one or more of claims 1-8, **characterized in that** the fibres, which may comprise food-grade materials, are mixed with an additional edible material, and the mixture obtained in this way is converted into the desired form, selected from a candy-form and a burger-form, by pressing.

10. Method according to claim 9, **characterized in that** the form obtained by pressing is coated.

11. Method according to claim 9 or 10, **characterized in that** the food product, after it has been shaped and before or after it is finished, is subjected to a treatment with a germicidal action.

12. Method according to claim 11, **characterized in that** the treatment with a germicidal action involves pasteurization which takes place at a temperature of 60-90 °C for 5-45 min.

13. Use of a food product according to one or more of claims 1-8 or obtained using the method according to one or more of claims 9-12 as the basis for a breakfast product to which the consumer can add food materials as desired, such as fruit, jam, cheese material, meat.

## Patentansprüche

1. Nahrungsmittelerzeugnis, welches Fasern umfasst, die zusammengesetzt sind aus Milchproteinmaterial, einem Hydrokolloid, das durch Metallkationen wasserunlöslich gemacht worden ist, Material, das Kalziumionen komplexiert hat, und wahlweise Feuchthaltemittel, so wie auch zusätzlichem verzehrbaren Material, das sich von der Zusammensetzung der Fasern unterscheidet und mit mindestens einigen der Fasern in Kontakt ist, wobei die Fasern wahlweise lebensmittelechtes Material umfassen, welches ausgewählt wird aus Farbstoff, Duftstoff und Aromastoffen.

2. Nahrungsmittelerzeugnis gemäß Anspruch 1, **dadurch gekennzeichnet, dass** das Nahrungsmittelerzeugnis in Form einer Süßware vorliegt und mit Schokolade, einer Mischung aus Honig und Nüssen oder Nussstücken überzogen ist.

3. Nahrungsmittelerzeugnis gemäß Anspruch 1, **dadurch gekennzeichnet, dass** das Nahrungsmittelerzeugnis in Form einer Süßware vorliegt, wobei die Fasern mit natürlichem Fruchtgeschmack getränkt sind und die Süßware mit Nüssen oder Nussstücken überzogen ist, die mit einer Glasur überzogen sind.

4. Nahrungsmittelerzeugnis gemäß einem oder mehreren der Ansprüche 1-3, **dadurch gekennzeichnet, dass** die Süßware aus einer Platten-, einer Riegel- oder einer Scheibenform ausgewählt ist.

5. Nahrungsmittelerzeugnis gemäß Anspruch 1, **dadurch gekennzeichnet, dass** das Nahrungsmittelerzeugnis ein flüssiges Frühstücksprodukt ist, und die Fasern einen niedrigen Anteil des Produktes ausmachen um beim Verzehr Biss geben.

6. Nahrungsmittelerzeugnis gemäß Anspruch 1, **dadurch gekennzeichnet, dass** das Nahrungsmittelerzeugnis in Burgerform ist und die Fasern mit bestimmten Materialien gemischt werden, so wie mit Nüssen, Nussstücken, kleinen Käsestücken, Zuckermaterial und Schokolade.

7. Nahrungsmittelerzeugnis gemäß einem oder mehrerer der Ansprüche 1-6, **dadurch gekennzeichnet, dass** das Nahrungsmittelerzeugnis in Burgerform ist und die Fasern unter Verwendung von flüssigen Materialien, wie Fruchtsäften, Zucker-/Essigmischungen, Essig, Sauerspread, Joghurt, Buttermilch und Weichkäse, hergestellt werden.

8. Nahrungsmittelerzeugnis gemäß Anspruch 1, **dadurch gekennzeichnet, dass** es die Form eines Burgers annimmt und aus einem schmackhaften Material und Fasern zusammengesetzt ist und dass es eine geschichtete Struktur von Fasern und schmackhaften Materialien umfasst, wobei die Fasern die Außenseite bilden.

9. Verfahren zur Herstellung eines Nahrungsmittelerzeugnisses gemäß einem der Asprüche 1-8, **dadurch gekennzeichnet, dass** die die Fasern, die lebensmittelechte Materialien umfassen können, mit einem zusätzlichen verzehrbaren Material gemischt werden und die hierbei erhaltene Mischung in die gewünschte Form gebracht wird, ausgewählt aus einer Süßwarenform oder einer Burgerform, mittels Pressen.

10. Verfahren gemäß Anspruch 9, **dadurch gekennzeichnet, dass** die durch Pressen erzeugte Form beschichtet wird.

11. Methode gemäß Ansprüchen 9 oder 10, **dadurch gekennzeichnet, dass** das Nahrungsmittelerzeugnis nach der Formgebung und vor oder nach der Fertigstellung einer Behandlung mit einer keimtötenden Handlung unterzogen wird.

12. Verfahren gemäß Anspruch 11, **dadurch gekennzeichnet, dass** die Behandlung mit einer keimtötenden Handlung eine Pasteurisierung einschließt, die bei einer Temperatur von 60-90°C für 5-45 min stattfindet.

13. Verwendung eines Nahrungsmittelerzeugnisses, gemäß einem oder mehrerer der Ansprüche 1-8, oder das durch das Verwenden des Verfahrens gemäß eines oder mehrerer der Ansprüche 9-12 erhalten wurde, als die Grundlage für ein Frühstücksprodukt, dem der Konsument Nahrungsmittelerzeugnisse wie erwünscht zufügen kann, so wie Früchte, Marmelade, Käsematerial, Fleisch.

## Revendications

1. Produit alimentaire qui comprend des fibres qui sont composées d'une matière de protéine du lait, un hydrocolloïde qui est rendu insoluble dans l'eau par des cations de métal, une matière qui a complexé des ions calcium et facultativement de l'humidité, ainsi qu'une matière comestible additionnelle qui diffère de la composition des fibres et est en contact avec au moins certaines des fibres, les fibres comprenant facultativement des matières alimentaires choisies parmi une couleur, un parfum et des arômes.

2. Produit alimentaire selon la revendication 1, **caractérisé en ce que** le produit alimentaire prend la forme d'un bonbon et est enrobé de chocolat, d'un mélange de miel et de noix ou de morceaux de noix.

3. Produit alimentaire selon la revendication 1, **caractérisé en ce que** le produit alimentaire prend la forme d'un bonbon, les fibres sont imprégnées avec un arôme naturel de fruit et la forme de bonbon est enrobée de noix ou de morceaux de noix qui sont couverts d'un glaçage.

4. Produit alimentaire selon une ou plusieurs des revendications 1 à 3, **caractérisé en ce que** la forme de bonbon est choisie parmi une forme de plaque, de bâton ou de disque.

5. Produit alimentaire selon la revendication 1, **caractérisé en ce que** le produit alimentaire est un produit liquide pour petit-déjeuner, et les fibres représentent une partie mineure du produit pour donner du croquant quand il est consommé.

6. Produit alimentaire selon la revendication 1, **caractérisé en ce que** le produit alimentaire se présente sous la forme d'un hamburger et les fibres sont mélangées avec des matières particulaires, telles que des noix ou des morceaux de noix, des petits morceaux de fromage, de la matière de sucre et du chocolat.

7. Produit alimentaire selon une ou plusieurs des revendications 1 et 6, **caractérisé en ce que** le produit alimentaire se présente sous la forme d'un hamburger et les fibres sont formées en utilisant des matières liquides, telles que des jus de fruit, des mélanges sucre/vinaigre, du vinaigre, un produit à étaler acide, un yaourt, du babeurre et du fromage à caillé mou.

8. Produit alimentaire selon la revendication 1, **caractérisé en ce qu'**il prend la forme d'un hamburger et est composé d'une matière salée et de fibres, et **en ce qu'**il comprend une structure stratifiée de fibres et des matières salées dans lesquelles les fibres forment le côté externe.

9. Procédé de préparation d'un produit alimentaire selon une ou plusieurs des revendications 1 à 8, **caractérisé en ce que** les fibres, qui peuvent comprendre des matières alimentaires, sont mélangées à une matière comestible additionnelle, et le mélange ainsi obtenu est converti dans la forme souhaitée, choisie parmi une forme de bonbon et une forme de hamburger, par pressage.

10. Procédé selon la revendication 9, **caractérisé en ce que** la forme obtenue par pressage est enrobée.

11. Procédé selon la revendication 9 ou 10, **caractérisé en ce que** le produit alimentaire, après avoir été mis en forme et avant ou après avoir été fini, est soumis à un traitement avec une action germicide.

12. Procédé selon la revendication 11, **caractérisé en ce que** le traitement avec une action germicide implique une pasteurisation qui se déroule à une température de 60 à 90 °C pendant 5 à 45 minutes.

13. Utilisation d'un produit alimentaire selon une ou plusieurs des revendications 1 à 8 ou obtenu à l'aide du procédé selon une ou plusieurs des revendications 9 à 12 comme base pour un produit de petit-déjeuner auquel le consommateur peut ajouter des matières alimentaires selon le souhait, telles que des fruits, de la confiture, une matière de fromage, de la viande.
